# EUROPEAN PATENT SPECIFICATION

(11) **EP 3 076 650 B1**
(45) Date of publication and mention of the grant of the patent: **27.12.2017**
(21) Application number: 14877383.1
(22) Date of filing: 30.12.2014
(51) Int. Cl.: H04M 19/00

(54) **POWER SUPPLY CIRCUIT AND TELEPHONE SYSTEM**
STROMVERSORGUNGSSCHALTUNG UND TELEFONSYSTEM
CIRCUIT D'ALIMENTATION ÉLECTRIQUE ET SYSTÈME TÉLÉPHONIQUE

(30) Priority: 31.12.2013 CN 201310754455
(43) Date of publication of application: 05.10.2016
(73) Proprietor: Huawei Device Co., Ltd., Shenzhen, Guangdong 518129 (CN)
(72) Inventor: WEI, Qiwen, Shenzhen Guangdong 518129 (CN); LIU, Bingsen, Shenzhen Guangdong 518129 (CN); ZENG, Huarong, Shenzhen Guangdong 518129 (CN)
(74) Representative: Gill Jennings & Every LLP
(86) International application number: PCT/CN2014/095683
(87) International publication number: WO 2015/101299

(56) References cited:
- CN-A- 1 625 033
- CN-A- 101 282 390
- CN-A- 102 843 029
- CN-A- 103 731 573
- CN-U- 202 406 034

## Description

### TECHNICAL FIELD

The present invention relates to the field of telephone technologies, and in particular, to a power supply circuit and a telephone system.

### BACKGROUND

As a standard analog telephone service, a conventional telephone service is a main component of telephone services for global household residents and enterprises. A power supply circuit in a telephone system can supply power for voice ports in the telephone system. A conventional voice line power supply system is a voice line power supply system of a separated type or a single-circuit power supply type, that is, an independent power supply system is used for each voice port, or a power supply system that outputs a fixed voltage is used to supply power for multiple voice ports. Each voice port of the telephone system may be connected to one telephone set or multiple telephone sets. Voltages that are needed when a voice port is in an off-hook state, a ringing state, and an on-hook state are all negative voltages, where a voltage value of a negative voltage that is needed when the voice port is in an off-hook state is less than a voltage value of a negative voltage that is needed when the voice port is in an on-hook state, and the voltage value of the negative voltage that is needed when the voice port is in an on-hook state is less than a voltage value of a negative voltage that is needed when the voice port is in a ringing state.

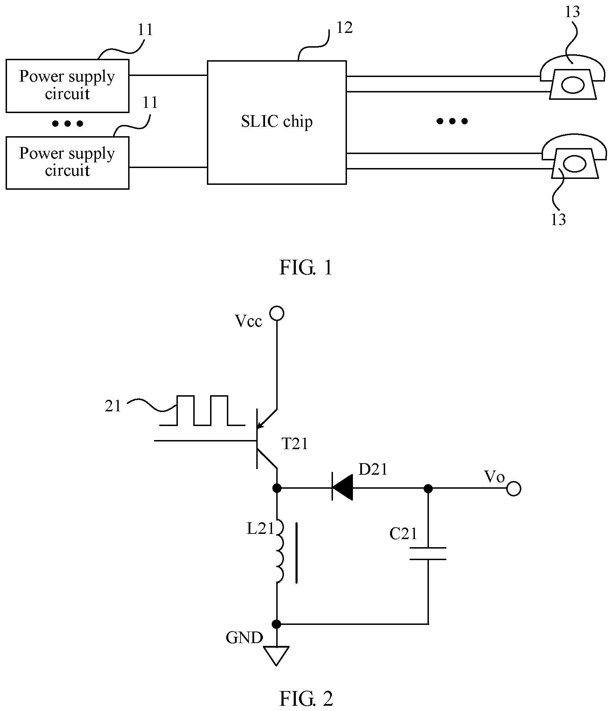

A telephone system for which power is supplied by using a telephone line of a separated type is shown in FIG. 1. In FIG. 1, power supply circuits 11 feed power to different voice ports of a subscriber line interface circuit 12 (SLIC, Subscriber Line Interface Circuit) separately. Telephone sets 13 are connected to the different voice ports of the SLIC 12 by using TIP/RING lines, where each voice port of the SLIC 13 is powered by one power supply circuit 11, that is, a quantity of the power supply circuits 11 is equal to a quantity of the voice ports of the SLIC. A voltage output by each power supply circuit is controlled by the SLIC, and varies with a voltage requirement of a voice port corresponding to the power supply circuit. Each power supply circuit is shown in FIG. 2. A SLIC achieves a change of an output voltage Vo of the power supply circuit by changing a frequency or a duty cycle of a control signal (namely, a signal 21). The power supply circuit shown in FIG. 2 includes a triode T21, a diode D21, an inductor L21, and a capacitor C21.

When power is supplied by using a telephone line of a separated type, because multiple power supply circuits are needed, there are a relatively large quantity of components of the power supply circuits, which increases a cost of an entire telephone system. In addition, a SLIC needs to manage each power supply circuit separately, which increases complexity of the system.

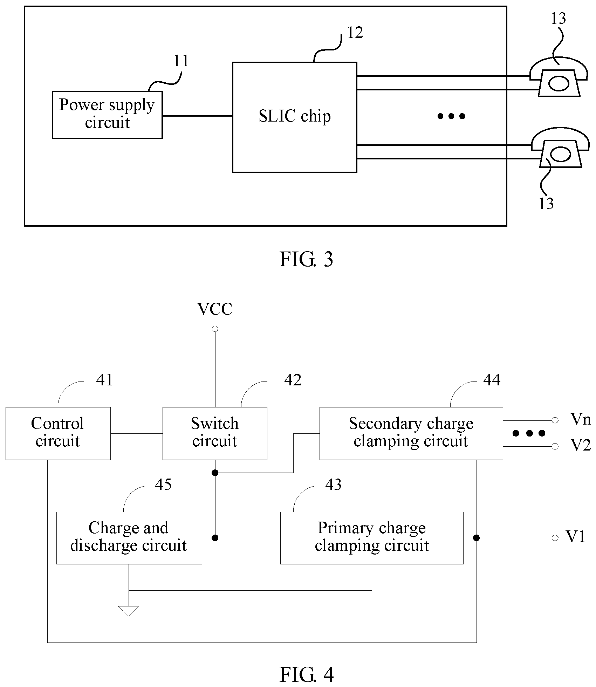

A telephone system for which power is supplied by using a telephone line of a single-circuit power supply type is shown in FIG. 3. In FIG. 3, there is only one power supply circuit 11, and a SLIC 12 controls, according to statuses of voice ports, the power supply circuit 11 to output a negative voltage whose voltage value is largest in those of negative voltages needed by these voice ports. That is, as long as one voice port is in a ringing state, the SLIC needs to control the power supply circuit 11 to output a negative voltage having a largest voltage value. The power supply circuit in FIG. 3 may use a structure that is the same as that of the power supply circuit shown in FIG. 2.

However, in the telephone system shown in FIG. 3, the SLIC 12 always controls an output voltage of the power supply circuit 11 according to a negative voltage needed by a voice port, which needs a negative voltage that has a largest voltage value, in all the voice ports, that is, a voltage output by the power supply circuit 11 is always a negative voltage needed by a voice port, which needs a negative voltage that has a largest voltage value, in all the voice ports of the SLIC 12. That is, even if only one voice port is in a ringing state and all other voice ports are in an on-hook state or an off-hook state, the power supply circuit 11 still needs to output a voltage that is needed when the voice ports are in a ringing state, and therefore there is relatively high energy consumption on the SLIC.

To sum up, in a telephone system for which power is supplied by using a telephone line of a single-circuit power supply type, components of a power supply circuit is reduced, but energy consumption of the telephone system is increased.

CN1625033 A discloses a double way DC/ DC transformation device with neutral point, including: the first DC voltage end and the second DC voltage end with neutral point; the inductor for energy buffering; the first electronic power switch that series connects to the inductor and bridge joint with the positive and the negative poles of the first DC voltage end and controls the storage and delivery of the induction; the second electronic power switch with one end connecting to the inductor and the joint point of the first electronic power switch, and the other end connecting to the positive pole of the DC voltage and controls the energy storage and delivery of the inductor; the first and the second diodes parallel to the first and the second electronic power switches; the condenser bridge joints between the positive end of the first and the second DC voltage to store the delivery of the inductor; the controller connects to the controlling end of the electronic power switch to control the conduction and break of the electronic power switch; this device can carry out double way energy transformation with voltage-doubling circuit with neutral point and semi-voltage circuit of the neutral point.

### SUMMARY

Embodiments of the present invention provide a power supply circuit and a telephone system, which are used to resolve a problem of high energy consumption of an existing telephone system for which power is supplied by using a telephone line of a single-circuit power supply type.

According to a first aspect, a power supply circuit is provided, including a control circuit, a switch circuit, a charge and discharge circuit, a primary charge clamping circuit, and a secondary charge clamping circuit, where
the control circuit is configured to output a control signal according to a voltage output by the primary charge clamping circuit and a preset voltage;
the switch circuit is configured to be switched between switch-on and switch-off according to the control signal output by the control circuit;
the charge and discharge circuit is configured to: when the switch circuit is switched on, acquire energy from a direct current power source via the switch circuit, and store the energy; and when the switch circuit is switched off, inject energy into the primary charge clamping circuit and the secondary charge clamping circuit separately by releasing the stored energy;
the primary charge clamping circuit is configured to output a voltage signal; and
the secondary charge clamping circuit is configured to output at least one voltage signal, where when a difference between the voltage output by the primary charge clamping circuit and the preset voltage is within a set range, the power supply circuit is in a steady state, and when the power supply circuit is in a steady state, the voltage output by the primary charge clamping circuit is not equal to a voltage output by the secondary charge clamping circuit.

With reference to the first aspect, in a first possible implementation manner, the secondary charge clamping circuit includes a first clamping coupled circuit and a first voltage clamping circuit, where
the first clamping coupled circuit is configured to: when the switch circuit is switched on, clamp a voltage at a first voltage following point to the voltage output by the primary charge clamping circuit, and when the switch circuit is changed from being switched on to being switched off, couple a voltage change at an originating point to the first voltage following point, where the originating point is a connection point at which the charge and discharge circuit and the switch circuit are connected, the first voltage following point is a connection point, which is in connection points at which the first clamping coupled circuit and the first voltage clamping circuit are connected, except a connection point at which an output end of the primary charge clamping circuit is connected, and the primary charge clamping circuit outputs the voltage signal by using the output end that is of the primary charge clamping circuit and that is connected to the first voltage clamping circuit; and
the first voltage clamping circuit is configured to: when the switch circuit is switched off, inject energy into the first voltage clamping circuit by using the charge and discharge circuit, and when the power supply circuit is in a steady state, clamp a voltage of a voltage signal output by the first voltage clamping circuit to a lowest voltage at the first voltage following point, where the lowest voltage at the first voltage following point is a lowest voltage at the first voltage following point when the power supply circuit is in a steady state and the switch circuit is in a switch-off period, and the voltage signal output by the first voltage clamping circuit is a voltage signal in the voltage signal output by the secondary charge clamping circuit.

With reference to the first aspect, in a second possible implementation manner, the primary charge clamping circuit includes a first diode and a first capacitor, where
a cathode of the first diode is connected to the direct current power source via the switch circuit, an anode of the first diode is connected to one end of the first capacitor, the other end of the first capacitor is grounded, and a voltage of the end that is of the first capacitor and that is connected to the anode of the first diode is the voltage output by the primary charge clamping circuit.

With reference to the first possible implementation manner of the first aspect, in a third possible implementation manner, the first clamping coupled circuit includes a second capacitor and a second diode, where
one end of the second capacitor is connected to the direct current power source via the switch circuit, the other end of the second capacitor is connected to an anode of the second diode, a cathode of the second diode is connected to the output end of the primary charge clamping circuit, and the anode of the second diode is the first voltage following point.

With reference to the first possible implementation manner of the first aspect, in a fourth possible implementation manner, the first voltage clamping circuit includes a third capacitor and a third diode, where
one end of the third capacitor is connected to the output end of the primary charge clamping circuit, the other end of the third capacitor is connected to an anode of the third diode, a cathode of the third diode is the first voltage following point, and a voltage signal of the anode of the third diode is the voltage signal output by the first voltage clamping circuit.

With reference to the first possible implementation manner of the first aspect, in a fifth possible implementation manner, the secondary charge clamping circuit further includes a second clamping coupled circuit and a second voltage clamping circuit, where
the second clamping coupled circuit is configured to: when the switch circuit is switched on, clamp a voltage at a second voltage following point to a voltage of the voltage signal output by the first voltage clamping circuit, and when the switch circuit is changed from being switched on to being switched off, couple a voltage change at the originating point to the second voltage following point, where the second voltage following point is a connection point, which is in connection points at which the second clamping coupled circuit and the second voltage clamping circuit are connected, except a connection point at which an output end of the first voltage clamping circuit is connected, and the first voltage clamping circuit outputs the voltage signal by using the output end that is of the first voltage clamping circuit and that is connected to the second voltage clamping circuit; and
the second voltage clamping circuit is configured to: when the switch circuit is switched off, inject energy into the second voltage clamping circuit by using the charge and discharge circuit, and when the power supply circuit is in a steady state, clamp a voltage of a voltage signal output by the second voltage clamping circuit to a lowest voltage at the second voltage following point, where the lowest voltage at the second voltage following point is a lowest voltage at the second voltage following point when the power supply circuit is in a steady state and the switch circuit is in a switch-off period, and the voltage signal output by the second voltage clamping circuit is a voltage signal in the voltage signal output by the secondary charge clamping circuit.

With reference to the fifth possible implementation manner of the first aspect, in a sixth possible implementation manner, the second clamping coupled circuit includes a fourth capacitor and a fourth diode, where
one end of the fourth capacitor is connected to the first voltage following point or is connected to a connection point at which the switch circuit and the primary charge clamping circuit are connected, the other end of the fourth capacitor is connected to an anode of the fourth diode, and a cathode of the fourth diode is connected to the output end of the first voltage clamping circuit.

With reference to the fifth possible implementation manner of the first aspect, in a seventh possible implementation manner, the second voltage clamping circuit includes a fifth capacitor and a fifth diode, where
one end of the fifth capacitor is connected to the output end of the first voltage clamping circuit, the other end of the fifth capacitor is connected to an anode of the fifth diode, a cathode of the fifth diode is the second voltage following point, and a voltage signal of the anode of the fifth diode is the voltage signal output by the second voltage clamping circuit.

With reference to the first aspect, in an eighth possible implementation manner, the voltage signal output by the primary charge clamping circuit and the voltage signal output by the secondary charge clamping circuit are used to supply power for a telephone line connected to a voice port of a telephone exchange.

According to a second aspect, a telephone system is provided, including the power supply circuit provided by the embodiments of the present invention and at least one telephone set.

According to the power supply circuit and the telephone system provided by the embodiments of the present invention, a control circuit outputs a control signal according to a voltage output by a primary charge clamping circuit and a preset voltage, when a switch circuit is switched on under control of the control signal, a charge and discharge circuit acquires energy from a direct current power source via the switch circuit and stores the energy, and when the switch circuit is switched off under control of the control signal, the charge and discharge circuit injects energy into the primary charge clamping circuit and a secondary charge clamping circuit separately by releasing the stored energy, so that a difference between a voltage output by the primary charge clamping circuit and the preset voltage is within a set range, and the power supply circuit enters a steady state. When the power supply circuit is in a steady state, a voltage of a voltage signal output by the primary charge clamping circuit is not equal to a voltage of a voltage signal output by the secondary charge clamping circuit. Therefore, the voltage signal that is output by the primary charge clamping circuit when the power supply circuit is in a steady state and the voltage signal that is output by the secondary charge clamping circuit when the power supply circuit is in a steady state may be used to supply power for a telephone line that is connected to drive a voice port of a telephone exchange, so that the telephone exchange can supply, by using different voltages according to statuses of different voice ports, power for telephone lines connected to the different voice ports, which resolves the following problem: because a power supply circuit of a telephone line outputs only one voltage signal, even if only one voice port is in a ringing state and all other voice ports are in an on-hook state or an off-hook state, the power supply circuit still needs to output a voltage that is needed when the voice ports are in a ringing state, resulting in relatively high energy consumption of a telephone system including the power supply circuit of the telephone line.

### BRIEF DESCRIPTION OF THE DRAWINGS

FIG. 1 is a first schematic structural diagram of a telephone system in the prior art;
FIG. 2 is a circuit diagram of a power supply circuit of a telephone line in the prior art;
FIG. 3 is a second schematic structural diagram of a telephone system in the prior art;
FIG. 4 is a first schematic structural diagram of a power supply circuit according to an embodiment of the present invention;
FIG. 5 is a second schematic structural diagram of a power supply circuit according to an embodiment of the present invention;
FIG. 6 is a first circuit diagram of a power supply circuit according to an embodiment of the present invention;
FIG. 7a is a third schematic structural diagram of a power supply circuit according to an embodiment of the present invention;
FIG. 7b is a fourth schematic structural diagram of a power supply circuit according to an embodiment of the present invention;
FIG. 8a is a second circuit diagram of a power supply circuit according to an embodiment of the present invention; and
FIG. 8b is a third circuit diagram of a power supply circuit according to an embodiment of the present invention.

### DETAILED DESCRIPTION OF THE EMBODIMENTS

Embodiments of the present invention provide a power supply circuit and a telephone system, where a charge and discharge circuit acquires energy from a direct current power source when a switch circuit is switched on, and when the switch circuit is switched off, the charge and discharge circuit injects energy into a primary charge clamping circuit and a secondary charge clamping circuit separately by releasing the energy stored by the charge and discharge circuit. In a process in which the switch circuit is continually switched on and switched off, the charge and discharge circuit continually injects energy into the primary charge clamping circuit and the secondary charge clamping circuit, so that a difference between a voltage of a voltage signal output by the primary charge clamping circuit and a preset voltage is within a set range, and the power supply circuit enters a steady state. When the power supply circuit is in a steady state, the voltage of the voltage signal output by the primary charge clamping circuit is not equal to a voltage of a voltage signal output by the secondary charge clamping circuit. Therefore, the voltage that is output by the primary charge clamping circuit when the power supply circuit is in a steady state and the voltage that is output by the secondary charge clamping circuit when the power supply circuit is in a steady state may be used to supply power for voice ports of the telephone system, so that a telephone exchange can supply, by using different voltages according to statuses of different voice ports, power for telephone lines connected to the different voice ports, which resolves the following problem: because a power supply circuit of a telephone line outputs only one voltage signal, even if only one voice port is in a ringing state and all other voice ports are in an on-hook state or an off-hook state, the power supply circuit still needs to output a voltage that is needed when the voice ports are in a ringing state, resulting in relatively high energy consumption of a telephone system including the power supply circuit of the telephone line.

The following describes, with reference to accompanying drawings in the specification, specific implementation manners of a power supply circuit and a telephone system provided by the embodiments of the present invention.

A power supply circuit provided by an embodiment of the present invention, as shown in FIG. 4, includes a control circuit 41, a switch circuit 42, a primary charge clamping circuit 43, a secondary charge clamping circuit 44, and a charge and discharge circuit 45, where
the control circuit 41 is configured to output a control signal according to a voltage output by the primary charge clamping circuit 43 and a preset voltage;
the switch circuit 42 is configured to be switched between switch-on and switch-off according to the control signal output by the control circuit 41;
the primary charge clamping circuit 43 is configured to output a voltage signal;
the secondary charge clamping circuit 44 is configured to output at least one voltage signal, where when a difference between the voltage output by the primary charge clamping circuit 43 and the preset voltage is within a set range, the power supply circuit is in a steady state, and when the power supply circuit is in a steady state, the voltage output by the primary charge clamping circuit 43 is not equal to a voltage output by the secondary charge clamping circuit 44; and
the charge and discharge circuit 45 is configured to: when the switch circuit 42 is switched on, acquire energy from a direct current power source VCC via the switch circuit 42, and store the energy; and when the switch circuit 42 is switched off, inject energy into the primary charge clamping circuit 43 and the secondary charge clamping circuit 44 separately by releasing the stored energy, so that a voltage of the voltage signal output by the primary charge clamping circuit 43 can be gradually close to the preset voltage.

When the power supply circuit is in a steady state, the voltage signal output by the primary charge clamping circuit 43 and the voltage signal output by the secondary charge clamping circuit may be used to supply, according to statuses of different voice ports in a telephone system, power for telephone lines connected to the different voice ports.

The control circuit 41 may output a pulse signal with a relatively large duty cycle as a control signal when the difference between the voltage output by the primary charge clamping circuit 43 and the preset voltage is beyond the set range, so that a voltage of the voltage signal output by the primary charge clamping circuit 43 can be quickly close to the preset voltage, that is, the power supply circuit can enter a steady state quickly. The control circuit 41 outputs a pulse signal with a relatively small duty cycle as a control signal when the difference between the voltage output by the energy storage circuit and the preset voltage is within the set range, so that the power supply circuit can be maintained to be in a steady state.

Optionally, the voltage signal output by the primary charge clamping circuit and the voltage signal output by the secondary charge clamping circuit are used to supply power for a telephone line connected to a voice port of a telephone exchange.

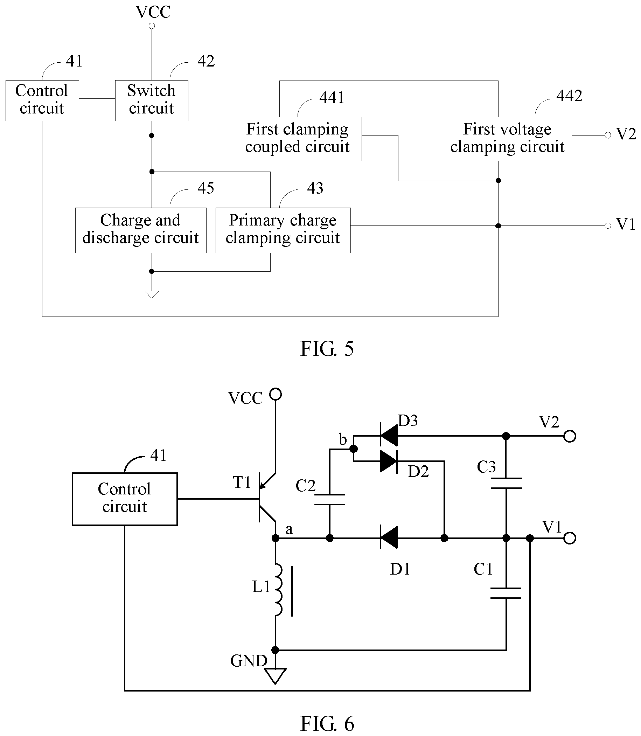

Optionally, a power supply circuit provided by an embodiment of the present invention is shown in FIG. 5, where a secondary charge clamping circuit includes a first clamping coupled circuit 441 and a first voltage clamping circuit 442, where
the first clamping coupled circuit 441 is configured to: when the switch circuit 42 is switched on, clamp a voltage at a first voltage following point to the voltage V1 output by the primary charge clamping circuit 43, and couple a voltage change at an originating point a when the switch circuit 42 is changed from being switched on to being switched off to the first voltage following point, where the originating point a is a connection point at which the switch circuit 42 and the charge and discharge circuit 45 are connected, the first voltage following point b is a connection point that is in connection points at which the first clamping coupled circuit 441 and the first voltage clamping circuit 442 are connected except a connection point at which an output end of the primary charge clamping circuit 43 is connected, and the primary charge clamping circuit 43 outputs the voltage signal by using the output end that is of the primary charge clamping circuit 43 and that is connected to the first voltage clamping circuit 442; and
the first voltage clamping circuit 442 is configured to: when the switch circuit 42 is switched off, inject energy into the first voltage clamping circuit 442 by using the charge and discharge circuit 45, and when the power supply circuit is in a steady state, clamp a voltage V2 of a voltage signal output by the first voltage clamping circuit 442 to a lowest voltage at the first voltage following point b, where the lowest voltage at the first voltage following point b is a lowest voltage at the first voltage following point b when the power supply circuit is in a steady state and the switch circuit 42 is in a switch-off period, and the voltage signal output by the first voltage clamping circuit 442 is a voltage signal in the voltage signal output by the secondary charge clamping circuit.

There are two connection points at which the first clamping coupled circuit 441 and the first voltage clamping circuit 442 are connected, where one connection point is connected to the output end of the primary charge clamping circuit 43, and the other connection point is the first voltage following point.

The switch circuit may be a triode, a metal-oxide semiconductor field-effect transistor (MOSFET, Metal-Oxide-Semiconductor Field Effect Transistor), or another switch component having a similar function. The charge and discharge circuit may be an inductor, or may be another circuit having a charge bump function.

Optionally, the power supply circuit provided by this embodiment of the present invention may use a circuit structure shown in FIG. 6. In a circuit shown in FIG. 6, the switch circuit is a PNP type triode T1, and the charge and discharge circuit is an inductor L1. The primary charge clamping circuit includes a first capacitor C1 and a first diode D1, where a cathode of the first diode D1 is connected to the direct current power source VCC via the switch circuit, namely, the PNP type triode T1, an anode of the first diode D1 is connected to one end of the first capacitor C1, the other end of the first capacitor C1 is grounded, that is, is connected to the GND, and a voltage of the end that is of the first capacitor C1 and that is connected to the anode of the first diode D1 is the voltage V1 output by the primary charge clamping circuit. The first clamping coupled circuit includes a second capacitor C1 and a second diode D2, where one end of the second capacitor C2 is connected to the direct current power source VCC via the switch circuit, namely, the PNP type triode T1, the other end of the second capacitor C2 is connected to an anode of the second diode D2, a cathode of the second diode D2 is connected to the output end of the primary charge clamping circuit, and the anode of the second diode D2 is the first voltage following point b. The first voltage clamping circuit includes a third capacitor C3 and a third diode D3, where one end of the third capacitor C3 is connected to the output end of the primary charge clamping circuit, the other end of the third capacitor C3 is connected to an anode of the third diode D3, a cathode of the third diode D3 is the first voltage following point b, and a voltage of the anode of the third diode D3 is the voltage V2 output by the first voltage clamping circuit.

As shown in FIG. 6, during a switch-on period of the switch circuit, namely, the PNP type triode T1, the direct current power source VCC charges the charge and discharge circuit and the second capacitor C2, and when the switch-on period of the PNP type triode T1 ends, energy stored in the second capacitor C2 is less than energy stored in the charge and discharge circuit, that is, the energy stored in the second capacitor C2 is less than energy stored in the inductor L1. During a switch-off period of the switch circuit, namely, the PNP type triode T1, the charge and discharge circuit releases energy stored during a switch-on period of the switch circuit. Because a discharge loop is formed between the charge and discharge circuit and the primary charge clamping circuit, in a process in which the charge and discharge circuit releases energy stored by the charge and discharge circuit (namely, in a process in which stored magnetic energy is transformed into electric energy and the electric energy is released to the ground), there is a counterclockwise flowing current in the foregoing discharge loop, that is, the inductor L1 extracts positive charges from the first capacitor C1 and the third capacitor C3, which is equivalent to injecting negative charges into the first capacitor C1 and the third capacitor C3, that is, injecting energy.

When the circuit shown in FIG. 6 is initially powered on, the triode T1 is in a switch-off state. In this case, a voltage at a connection point at which the switch circuit, the charge and discharge circuit, and the primary charge clamping circuit are connected, namely, the originating point a, a voltage at the first voltage following point b, the voltage V1 output by the primary charge clamping circuit, and the voltage V2 output by the first voltage clamping circuit are all 0 V. The transistor T1 is switched between a switch-on state and a switch-off state under drive of the control signal output by the control circuit.

During a first switch-on period of the transistor T1, a current flows from the direct current power source VCC to the inductor L1 through the transistor T1. When the current flows through the inductor L1, electric energy is transformed into magnetic energy, and the magnetic energy is stored in the inductor L1. Because an inductor current does not change suddenly, during the switch-on period of the transistor T1, a value of the current flowing through the inductor L1 increases continually (magnetic saturation does not occur in the inductor L1 during an operating period of the circuit shown in FIG. 6). By adjusting a value of a level value of the control signal, the transistor T1 is maintained to be in a saturate switch-on state. In this case, the direct current power source VCC charges the inductor L1 and the second capacitor C2 via the transistor T1, and the voltage at the originating point a quickly increases from 0 to a voltage close to a voltage Vcc of the direct current power source VCC. Certainly, the transistor T1 may also be maintained to be only in a switch-on state by adjusting a value of a level value of the control signal. In this case, the direct current power source VCC charges the inductor L1 and the first capacitor C1 via the transistor T1, and the voltage at the originating point a also increases from 0 to a voltage close to the voltage Vcc of the direct current power source VCC, but an increasing speed is relatively slow. Because voltages of two ends of a capacitor do not change suddenly, voltages of two ends of the first capacitor C1 quickly change in a same direction, and therefore the voltage at the first voltage following point b also increases. However, because in this case, the voltage output by the primary charge clamping circuit is approximately 0, the second capacitor C2 charges (injects positive charges into) the first capacitor C1 and the third capacitor C3 via the first diode D1. After charging of the second capacitor C2 is completed, the direct current power source VCC can no longer charge the first capacitor C1 and the third capacitor C3, whereas charging, by the direct current power source VCC, of the inductor L1 via the triode T1 lasts until the switch-on period of the triode T1 ends. When the first switch-on period of the transistor T1 ends, both the voltage at the first voltage following point b and the voltage V1 output by the primary charge clamping circuit are positive voltages. The voltage V2 output by the first voltage clamping circuit is also a positive voltage, but is lower than the voltage V1 output by the primary charge clamping circuit.

After the first switch-on period of the transistor T1 ends, the transistor T1 enters a first switch-off period. In this case, the direct current power source VCC can no longer charge the inductor L1 via the triode T1. Because an inductor current does not change suddenly, a direction of a current in the inductor L1 does not change and the current still flows from the inductor L1 to the ground. In this case, the inductor L1 starts to release the energy stored during the first switch-on period of the transistor T1, that is, transform the stored magnetic energy into electric energy and release the electric energy to the ground. Because of the first diode D1, when the voltage at the originating point a decreases to a voltage lower than V1, the energy (namely, the positive charges injected during the switch-on period) stored in the first capacitor C1 also starts to be released. The inductor L1, the first diode 12, and the first capacitor C1 form a discharge loop, and a current flows from the first capacitor C1 to the ground through the first diode D1 and the inductor L1. Because during the first switch-on period of the transistor T1, the energy stored in the second capacitor C2 is less than the energy stored in the inductor L1, and after charging of the second capacitor C2 is completed, the direct current power source VCC can no longer charge the first capacitor C 1 and the third capacitor C3, a sum of the energy stored in the first capacitor C1 and the energy stored in the third capacitor C3 (which are formed by positive charges) is less than the energy stored in the inductor L1, and therefore, before the inductor L1 completely releases the stored energy, the energy stored in the second capacitor C2 and the energy stored in the third capacitor C3 have already been completely released. To form freewheeling in the discharge loop, positive charges at the end that is of the first capacitor C1 and that is connected to the anode of the second diode D2 continue to be extracted, and the first capacitor C1 and the third capacitor C3 start to be charged in an opposite direction (which is equivalent to injecting negative charges). That is, after changing to 0, a voltage of the end that is of the first capacitor C 1 and that is connected to the anode of the second diode D2 continues to decrease, until the first switch-off period of the transistor T1 ends or the energy stored in the inductor L1 is completely released. Therefore, when the first switch-off period of the transistor T1 ends, a voltage output by the primary charge clamping circuit is lower than the voltage output by the primary charge clamping circuit when the power supply circuit is initially powered on. In a process in which the energy stored in the inductor L1 is released, the voltage at the originating point a changes from a positive voltage close to Vcc to a negative voltage. Because voltages of two ends of the second capacitor C2 do not change suddenly, when the voltage at the originating point a changes from a positive value to a negative value, the voltage at the first voltage following point b also decreases, which shows a tendency of changing with the voltage at the originating point a. Due to the existence of the third diode D3, when the voltage at the first voltage following point b decreases, the voltage V2 output by the first voltage clamping circuit also decreases, until there is basically no voltage difference between two ends of the third diode D3.

After the first switch-off period of the transistor T1 ends, the transistor T1 enters a second switch-on period. In this case, the voltage at the originating point a changes from a negative voltage back to a positive voltage. Same as the first switch-on period of the transistor T1, in this case, the voltage at the first voltage following point b also increases with the voltage at the originating point a. Due to the existence of the second diode D2, when the voltage at the first voltage following point b increases to a voltage higher than the voltage that is output by the primary charge clamping circuit when the first switch-off period of the transistor T1 ends, a current flows through the second diode D2 from the first voltage following point b to charge (inject positive charges again into) the second capacitor C2 and the third capacitor C3.

Therefore, during each switch-on period of the transistor T1, the direct current power source VCC injects positive charges into the inductor L1, the first capacitor C1, the second capacitor C2, and the third capacitor C3 via the switch circuit T1. During a switch-off period after each switch-on period of the transistor T1, energy stored in the inductor L1, the first capacitor C1, the second capacitor C2, and the third capacitor C3 are released, that is, positive charges injected into the inductor L1, the first capacitor C1, the second capacitor C2, and the third capacitor C3 are extracted, and positive charges extracted from the first capacitor C1, the second capacitor C2, and the third capacitor C3 are more than positive charges injected during a switch-on period of the transistor T1. Therefore, the voltage V1 output by the primary charge clamping circuit, the voltage V2 output by the first voltage clamping circuit, and the voltage at the first voltage following point b continually decrease with continual switching of the transistor T1 between a switch-on state and a switch-off state.

When the control circuit 14 determines that a difference between the voltage V1 output by the primary charge clamping circuit and the preset voltage is within the set range, the power supply circuit enters a steady state. In this case, the voltage V1 output by the primary charge clamping circuit is approximately equal to a lowest voltage Va at the originating point a during a switch-off period of the transistor T1 when the circuit enters a steady state, where Va is less than 0. Due to the existence of the second diode D2, after the power supply circuit enters a steady state, during a switch-on period of the transistor T1, the direct current power source VCC can charge the first capacitor C1 and the third capacitor C3 via the second capacitor C2 and the second diode D2, but because a capacitance value of the first capacitor C1 is far greater than a capacitance value of the second capacitor C2, and a capacitance value of the third capacitor C3 is far greater than the capacitance value of the second capacitor C2, positive charges injected into the first capacitor C1 and the third capacitor C3 have little impact on the voltage output by the primary charge clamping circuit. Certainly, a larger ratio of the capacitance value of the first capacitor C1 to the capacitance value of the second capacitor C2 and a larger ratio of the capacitance value of the third capacitor C3 to the capacitance value of the second capacitor C2 indicate a smaller impact of the positive charges injected into the first capacitor C1 and the third capacitor C3 on the voltage output by the primary charge clamping circuit, where the capacitance value of the first capacitor C1 may be equal to or may not be equal to the capacitance value of the third capacitor C3. After the power supply circuit enters a steady state, during a switch-on period of the transistor T1, due to the existence of the second diode D2, the voltage at the first voltage following point b is approximately equal to the voltage V1 output by the energy storage circuit, that is, the voltage at the first voltage following point b is approximately Va. After the power supply circuit enters a steady state, after the transistor T1 is changed from being switched on to being switched off, the voltage at the originating point a decreases from a voltage close to Vcc to Va, and therefore, a decrease range is approximately Vcc - Va. In this case, because voltages of two ends of the second capacitor C2 do not change suddenly, the voltage at the first voltage following point b also decreases by approximately Vcc - Va, that is, the voltage at the first voltage following point b decreases to a voltage approximately equal to 2Va - Vcc. Due to the existence of the third diode D3, the voltage output by the first voltage clamping circuit is also approximately 2Va - Vcc. When Va is set to a quite high negative voltage, Vcc may be ignored with respect to Va. Therefore, after the power supply circuit enters a steady state, the voltage output by the primary charge clamping circuit is approximately Va, and the voltage output by the first voltage clamping circuit is approximately 2Va, and therefore, two different voltages may be output by the power supply circuit after the power supply circuit enters a steady state.

A voice port in a telephone system may be in one of an off-hook state, an on-hook state, and a ringing state, where a negative voltage needed by a voice port in an off-hook state has a smallest absolute value, a negative voltage needed by a voice port in a ringing state has a largest absolute value, and an absolute value of a negative voltage needed by a voice port in an on-hook state has an absolute value between the smallest absolute value and the largest absolute value. Therefore, after the power supply circuit enters a steady state, a SLIC can provide different voltages for different voice ports in the telephone system according to statuses of the different voice ports. For example, after the power supply circuit enters a steady state, the SLIC supplies, by using the voltage V1 output by the primary charge clamping circuit, power for a voice port that is in the telephone system and that is in an off-hook state, and supplies, by using the voltage V2 output by the first voltage clamping circuit, power for a voice port that is in the telephone system and that is in an on-hook state or a ringing state.

When the control circuit 14 determines that the difference between the voltage V1 output by the energy storage circuit and the preset voltage is within the set range, the control circuit may decrease a duty cycle of an output control signal, or may even control the transistor T1 to be in a switch-off state for a long time, until negative charges on the first capacitor C1 decrease due to a leakage current of the first capacitor C1 or consumption of later-stage load, and when the voltage V1 output by the primary charge clamping circuit increases to a voltage of which a difference with the preset voltage is beyond the set range, after the transistor T1 is again controlled to be switched on for a period of time, the transistor T1 is switched off, so that the charge and discharge circuit can inject energy (extract positive charges, which is equivalent to injecting negative charges) into the primary charge clamping circuit and the secondary charge clamping circuit, and the voltage V1 output by the primary charge clamping circuit decreases again.

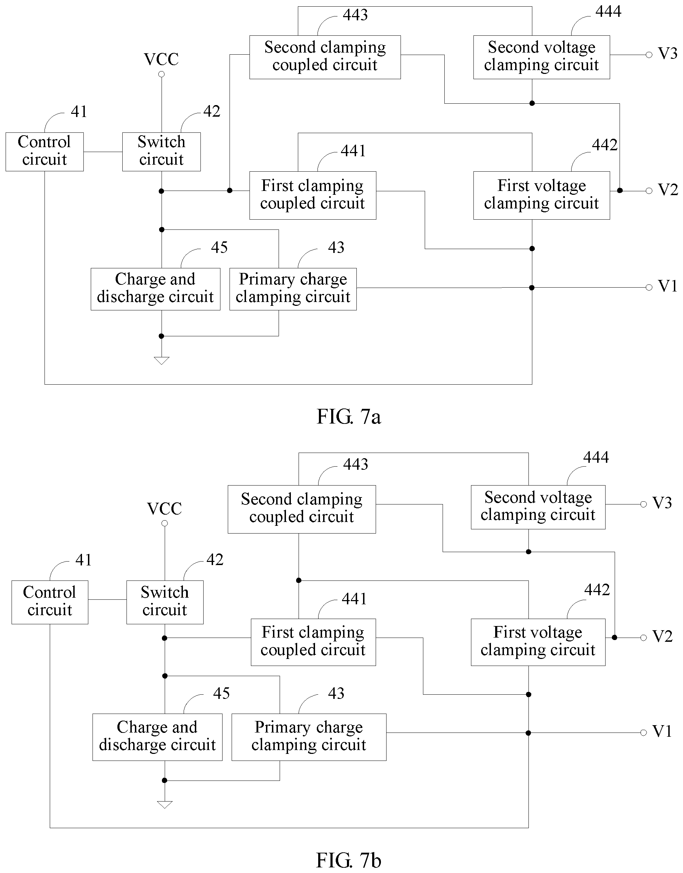

Optionally, a power supply circuit provided by an embodiment of the present invention is shown in FIG. 7a and FIG. 7b, where the secondary charge clamping circuit further includes a second clamping coupled circuit 443 and a second voltage clamping circuit 444.

The second clamping coupled circuit 443 is configured to: when the switch circuit 42 is switched on, clamp a voltage at a second voltage following point c to a voltage V2 of the voltage signal output by the first voltage clamping circuit 442, and when the switch circuit 42 is changed from being switched on to being switched off, couple a voltage change at the originating point a to the second voltage following point c, where the second voltage following point c is a connection point that is in connection points at which the second clamping coupled circuit 443 and the second voltage clamping circuit 444 are connected except a connection point at which an output end of the first voltage clamping circuit 442 is connected, and the first voltage clamping circuit 442 outputs the voltage signal by using the output end that is of the first voltage clamping circuit 442 and that is connected to the second voltage clamping circuit 443. There are two connection points at which the second clamping coupled circuit 443 and the second voltage clamping circuit 444 are connected, where one of the two connection points is connected to the output end of the first voltage clamping circuit 442 and the other is the second voltage following point c.

In FIG. 7a, the second clamping coupled circuit 443 directly couples a voltage change at the originating point a to the second voltage following point c when the switch circuit 42 is changed from being switched on to being switched off. In FIG. 7b, the second clamping coupled circuit 443 couples a voltage change at the first voltage following point b to the second voltage following point c when the switch circuit 42 is changed from being switched on to being switched off, and because the first clamping coupled circuit 441 can couple a voltage change at the originating point a to the first voltage following point b when the switch circuit 42 is changed from being switched on to being switched off, the second clamping coupled circuit 443 can couple the voltage change at the originating point a to the second voltage following point c when the switch circuit 42 is changed from being switched on to being switched off. When the switch circuit 42 is switched on, the second clamping coupled circuit 443 acquires energy from the direct current power source VCC via the switch circuit 42 and the first clamping coupled circuit 432 and stores the energy into the first voltage clamping circuit 442 and the second voltage clamping circuit 444, where positive charges that are injected into the second voltage clamping circuit 444 by the direct current power source VCC when the switch circuit is switched on are less than positive charges that are extracted from the second voltage clamping circuit 444 by the charge and discharge circuit 45 when the switch circuit 42 is switched off.

The second voltage clamping circuit 444 is configured to: when the switch circuit 42 is switched off, inject energy into the second voltage clamping circuit 444 by using the charge and discharge circuit 45, and when the power supply circuit is in a steady state, clamp a voltage of a voltage signal output by the second voltage clamping circuit 444 to a lowest voltage at the second voltage following point c, where the lowest voltage at the second voltage following point c is a lowest voltage at the second voltage following point c when the power supply circuit is in a steady state and the switch circuit 42 is in a switch-off period, and the voltage signal output by the second voltage clamping circuit 444 is a voltage signal in the voltage signal output by the secondary charge clamping circuit.

Therefore, the power supply circuit in FIG. 7a and FIG. 7b may output three different voltages. After the power supply circuit enters a steady state, the SLIC can provide different voltages for different voice ports in the telephone system according to statuses of the different voice ports. For example, after the power supply circuit enters a steady state, the SLIC supplies, by using a voltage V1 output by the primary charge clamping circuit, power for a voice port that is in the telephone system and that is in an off-hook state, supplies, by using a voltage V2 output by the first voltage clamping circuit, power for a voice port that is in the telephone system and that is in an on-hook state or a ringing state, and supplies, by using a voltage V3 output by the second voltage clamping circuit, power for a voice port that is in the telephone system and that is in a ringing state, thereby further reducing energy consumption of the telephone system.

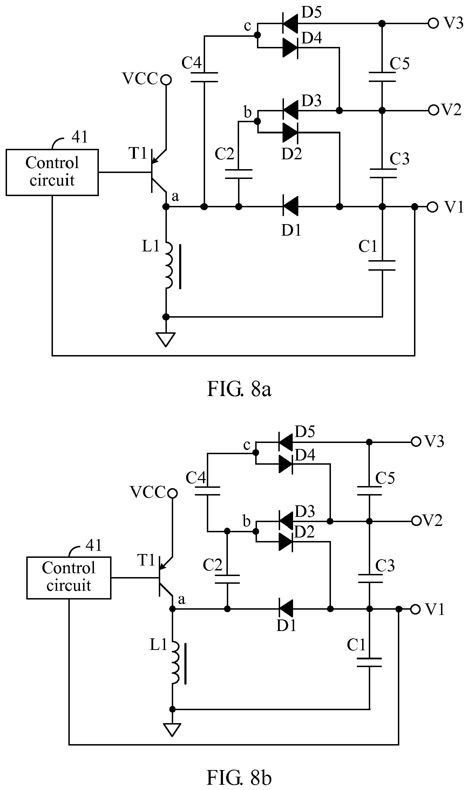

Optionally, the power supply circuit shown in FIG. 7a may use a circuit structure shown in FIG. 8a, and the power supply circuit shown in FIG. 7b may use a circuit structure shown in FIG. 8b. In a circuit shown in FIG. 8a, the second clamping coupled circuit includes a fourth capacitor C4 and a fourth diode D4, where one end of the fourth capacitor C4 is connected to a connection point at which the switch circuit is connected to the charge and discharge circuit, namely, the originating point a, the other end of the fourth capacitor C4 is connected to an anode of the fourth diode D4, and a cathode of the fourth diode D4 is connected to the output end of the first voltage clamping circuit, that is, a voltage signal of the cathode of the fourth diode D4 is the voltage signal V2 output by the first voltage clamping circuit. In a circuit shown in FIG. 8b, one end of the fourth capacitor C4 is not connected to the connection point at which the switch circuit is connected to the charge and discharge circuit, namely, the originating point a, but the first voltage following point b instead, that is, one end of the fourth capacitor C4 is connected to the connection point at which the switch circuit is connected to the charge and discharge circuit, namely, the originating point a, via the second capacitor C2.

In the circuit shown in FIG. 8a, when a switch-on period of the switch circuit ends, energy stored in the fourth capacitor C4 is less than energy stored by the charge and discharge circuit. In the circuit shown in FIG. 8b, when a switch-on period of the switch circuit ends, energy stored in the first capacitor C1 is less than energy stored by the charge and discharge circuit.

In FIG. 8a and FIG. 8b, the second voltage clamping circuit includes a fifth capacitor C5 and a fifth diode D5, where one end of the fifth capacitor C5 is connected to the output end of the first voltage clamping circuit, that is, a voltage signal of one end of the fifth capacitor C5 is the voltage signal V2 output by the first voltage clamping circuit; the other end of the fifth capacitor is connected to an anode of the fifth diode D5, a cathode of the fifth diode D5 is the second voltage following point c, and a voltage signal of the anode of the fifth diode D5 is the voltage signal V3 output by the second voltage clamping circuit.

An operating principle of the circuits shown in FIG. 8a and FIG. 8b is similar to an operating principle of the circuit shown in FIG. 6, and details are not described herein again.

When the circuit shown in FIG. 8a or FIG. 8b enters a steady state, that is, a difference between the voltage V1 output by the primary charge clamping circuit and the preset voltage is within the set range, the voltage V1 output by the primary charge clamping circuit is approximately equal to a lowest voltage Va at the originating point a during a switch-off period of the transistor T1 when the circuit enters a steady state, where Va is less than 0. Due to the existence of the second diode D2, after the power supply circuit enters a steady state, during a switch-on period of the transistor T1, the direct current power source VCC can charge the first capacitor C1 and the third capacitor C3 via the second capacitor C2 and the second diode D2, but because a capacitance value of the first capacitor C1 is far greater than a capacitance value of the second capacitor C2, and a capacitance value of the third capacitor C3 is far greater than the capacitance value of the second capacitor C2, positive charges injected into the first capacitor C1 and the second capacitor C2 have little impact on the voltage output by the primary charge clamping circuit. Certainly, a larger ratio of the capacitance value of the first capacitor C1 to the capacitance value of the second capacitor C2 and a larger ratio of the capacitance value of the third capacitor C3 to the capacitance value of the second capacitor C2 indicate a smaller impact of the positive charges injected into the first capacitor C1 and the third capacitor C3 on the voltage output by the primary charge clamping circuit.

After the power supply circuit enters a steady state, during a switch-on period of the transistor T1, due to the existence of the second diode D2, the voltage at the first voltage following point b is approximately equal to the voltage V1 output by the primary charge clamping circuit, that is, the voltage at the first voltage following point b is Va. After the power supply circuit enters a steady state, during a switch-off period of the transistor T1, the voltage at the originating point a decreases from a voltage close to Vcc to Va, and therefore a decrease range is approximately Vcc - Va. In this case, because voltages of two ends of the second capacitor C2 do not change suddenly, the voltage at the first voltage following point b also decreases by approximately Vcc - Va, that is, the voltage at the first voltage following point b decreases to a voltage approximately equal to 2Va - Vcc. Due to the existence of the third diode D3, the voltage output by the first voltage clamping circuit is also approximately 2Va - Vcc.

Due to the existence of the fourth diode D4, after the power supply circuit enters a steady state, during a switch-on period of the transistor T1, the direct current power source VCC can charge the third capacitor C3 and the fifth capacitor C5 via the fourth capacitor C4 (and the first capacitor C1 in a case shown in FIG. 8b) and the fourth diode D4, but because the capacitance value of the third capacitor C3 is far greater than a capacitance value of the fourth capacitor C4 (the first capacitor C1 in the case shown in FIG. 8b), and a capacitance value of the fifth capacitor C5 is far greater than the capacitance value of the fourth capacitor C4 (the first capacitor C1 in the case shown in FIG. 8b), positive charges injected into the third capacitor C3 and the fifth capacitor C5 have little impact on the voltage output by the first voltage clamping circuit. Certainly, a larger ratio of the capacitance value of the third capacitor C3 to the capacitance value of the fourth capacitor C4 (the first capacitor C1 in the case shown in FIG. 8b) and a larger ratio of the capacitance value of the fifth capacitor C5 to the capacitance value of the fourth capacitor C4 (the first capacitor C1 in the case shown in FIG. 8b) indicate a smaller impact of the positive charges injected into the third capacitor C3 and the fifth capacitor C5 on the voltage output by the first voltage clamping circuit.

After the power supply circuit enters a steady state, during a switch-on period of the transistor T1, due to the existence of the fourth diode D4, the voltage at the second voltage following point c is approximately equal to the voltage V2 output by the first voltage clamping circuit, that is, the voltage at the second voltage following point c is approximately 2Va - Vcc. After the power supply circuit enters a steady state, during a switch-off period of the transistor T1, the voltage at the originating point a decreases from a voltage close to Vcc to Va, and therefore a decrease range is approximately Vcc - Va, and the voltage at the first voltage following point b also decreases by approximately Vcc - Va. In this case, because voltages of two ends of the first capacitor C1 do not change suddenly and voltages of two ends of the fourth capacitor C4 do not change suddenly, the voltage at the voltage following point c in the second charge clamping circuit also decreases by approximately Vcc - Va, that is, the voltage at the second voltage following point c decreases to a voltage approximately equal to 3Va - 2Vcc. Due to the existence of the fifth diode D5, the voltage output by the second voltage clamping circuit is also approximately 3Va - 2Vcc. When Va is set to a quite high negative voltage, Vcc may be ignored with respect to Va. Therefore, after the power supply circuit enters a steady state, the voltage output by the energy storage circuit is approximately Va, the voltage output by the first voltage clamping circuit is approximately 2Va, and the voltage output by the second voltage clamping circuit is approximately 3Va. Therefore, the power supply circuit may output three different voltages after entering a steady state, so that the SLIC can supply power for voice ports in the telephone system according to statuses of the voice ports, thereby further reducing energy consumption of the telephone system. Certainly, the voice ports in the telephone system may also be supplied with power according to the statuses of the voice ports by using any two voltages of the three different voltages output by the power supply circuit after the power supply circuit enters a steady state.

Optionally, in the power supply circuit provided by this embodiment of the present invention, the secondary charge clamping circuit further includes an n^{th} clamping coupled circuit and an n^{th} voltage clamping circuit, where n is a positive integer, and n is greater than or equal to 3, and
the n^{th} clamping coupled circuit is configured to: when the switch circuit is switched on, clamp a voltage at an n^{th} voltage following point to a voltage output by an (n - 1)^{th} voltage clamping circuit, and couple, to the n^{th} voltage following point, a voltage change at the originating point when the switch circuit is changed from being switched on to being switched off, where the n^{th} voltage following point is a connection point, which is in connection points at which the n^{th} clamping coupled circuit and the n^{th} voltage clamping circuit are connected, except a connection point at which an output end of the (n - 1)^{th} voltage clamping circuit is connected, and the (n - 1)^{th} voltage clamping circuit outputs a voltage signal by using the output end that is of the (n - 1)^{th} voltage clamping circuit and that is connected to the n^{th} voltage clamping circuit; and
the n^{th} voltage clamping circuit is configured to: when the switch circuit is switched off, inject energy into the n^{th} voltage clamping circuit by using the charge and discharge circuit, and when the power supply circuit is in a steady state, clamp, to a lowest voltage at the n^{th} voltage following point, a voltage of a voltage signal output by the n^{th} voltage clamping circuit, where the lowest voltage at the n^{th} voltage following point is a lowest voltage at the n^{th} voltage following point when the power supply circuit is in a steady state and the switch circuit is in a switch-off period, and the voltage signal output by the n^{th} voltage clamping circuit is a voltage signal in the voltage signal output by the secondary charge clamping circuit.

The n^{th} clamping coupled circuit may use a structure that is the same as that of the second clamping coupled circuit, or may use another structure, and the n^{th} voltage clamping circuit may use a structure that is the same as that of the second voltage clamping circuit, or may use another structure.

When the secondary charge clamping circuit in the power supply circuit provided by this embodiment of the present invention includes the n^{th} clamping coupled circuit and the n^{th} voltage clamping circuit, the power supply circuit further includes clamping coupled circuits from the second clamping coupled circuit to an (n - 1)^{th} clamping coupled circuit, and includes voltage clamping circuits from the second voltage clamping circuit to the (n - 1)^{th} voltage clamping circuit.

Functions of a control chip in the power supply circuit provided by this embodiment of the present invention may be integrated into a SLIC chip, or another chip may be used.

A telephone system provided by an embodiment of the present invention includes the power supply circuit provided by the embodiments of the present invention and at least one telephone.

From the above description of the implementation manners, a person skilled in the art can clearly understand that the embodiments of the present invention may be implemented by using hardware, or may be implemented by means of software and a necessary general-purpose hardware platform. Based on such understanding, the technical solutions in the embodiments of the present invention may be embodied in a form of a software product, where the software product may be stored in nonvolatile storage medium (may be a CD-ROM, a USB flash drive, a removable hard disk, and the like), and includes several instructions, so that a computer device (may be a personal computer, a server, a network device, or the like) executes a method described in the embodiments of the present invention.

A person skilled in the art may understand that the accompanying drawings are merely schematic diagrams of exemplary embodiments, and modules or processes in the accompanying drawings are not necessarily required for implementing the present invention.

A person skilled in the art may understand that the modules in the apparatuses provided in the embodiments may be arranged in the apparatuses in a distributed manner according to the description of the embodiments, or may be arranged in one or more apparatuses that are different from those described in the embodiments. The modules in the foregoing embodiments may be combined into one module, or split into a plurality of submodules.

The sequence numbers of the foregoing embodiments of the present invention are merely for illustrative purposes, and are not intended to indicate priorities of the embodiments.

Obviously, a person skilled in the art can make various modifications and variations to the present invention without departing from the scope of the present invention. The present invention is intended to cover these modifications and variations provided that they fall within the scope of protection defined by the following claims and their equivalent technologies.

## Claims

1. A power supply circuit, comprising a control circuit(41), a switch circuit(42), a charge and discharge circuit(45), a primary charge clamping circuit(43), and a secondary charge clamping circuit(44), wherein
the control circuit (41) is configured to output a control signal according to a voltage output by the primary charge clamping circuit and a preset voltage;
the switch circuit(42) is configured to be switched between switch-on and switch-off according to the control signal output by the control circuit;
the charge and discharge circuit(45) is configured to: when the switch circuit is switched on, acquire energy from a direct current power source via the switch circuit, and store the energy; and when the switch circuit is switched off, inject energy into the primary charge clamping circuit and the secondary charge clamping circuit separately by releasing the stored energy;
the power supply circuit **characterized by**:
the primary charge clamping circuit(43) is configured to output a voltage signal; and
the secondary charge clamping circuit(44) is configured to output at least one voltage signal, wherein when a difference between the voltage output by the primary charge clamping circuit and the preset voltage is within a set range, the power supply circuit is in a steady state, and when the power supply circuit is in a steady state, the voltage output by the primary charge clamping circuit is not equal to a voltage output by the secondary charge clamping circuit;
wherein the secondary charge clamping circuit(44) comprises a first clamping coupled circuit(441) and a first voltage clamping circuit(442), wherein
the first clamping coupled circuit(441) is configured to: when the switch circuit is switched on, clamp a voltage at a first voltage following point to the voltage output by the primary charge clamping circuit, and when the switch circuit is changed from being switched on to being switched off, couple a voltage change at an originating point to the first voltage following point, wherein the originating point is a connection point at which the charge and discharge circuit and the switch circuit are connected, the first voltage following point is a connection point, which is in connection points at which the first clamping coupled circuit and the first voltage clamping circuit are connected, except a connection point at which an output end of the primary charge clamping circuit is connected, and the primary charge clamping circuit outputs the voltage signal by using the output end that is of the primary charge clamping circuit and that is connected to the first voltage clamping circuit; and
the first voltage clamping circuit(442) is configured to: when the switch circuit is switched off, inject energy into the first voltage clamping circuit by using the charge and discharge circuit, and when the power supply circuit is in a steady state, clamp a voltage of a voltage signal output by the first voltage clamping circuit to a lowest voltage at the first voltage following point, wherein the lowest voltage at the first voltage following point is a lowest voltage at the first voltage following point when the power supply circuit is in a steady state and the switch circuit is in a switch-off period, and the voltage signal output by the first voltage clamping circuit is a voltage signal in the voltage signal output by the secondary charge clamping circuit.

2. The circuit according to claim 1, wherein the primary charge clamping circuit(43) comprises a first diode and a first capacitor, wherein
a cathode of the first diode is connected to the direct current power source via the switch circuit, an anode of the first diode is connected to one end of the first capacitor, the other end of the first capacitor is grounded, and a voltage of the end that is of the first capacitor and that is connected to the anode of the first diode is the voltage output by the primary charge clamping circuit.

3. The circuit according to claim 1, wherein the first clamping coupled circuit(441) comprises a second capacitor and a second diode, wherein
one end of the second capacitor is connected to the direct current power source via the switch circuit, the other end of the second capacitor is connected to an anode of the second diode, a cathode of the second diode is connected to the output end of the primary charge clamping circuit, and the anode of the second diode is the first voltage following point.

4. The circuit according to claim 1, wherein the first voltage clamping circuit(442) comprises a third capacitor and a third diode, wherein
one end of the third capacitor is connected to the output end of the primary charge clamping circuit, the other end of the third capacitor is connected to an anode of the third diode, a cathode of the third diode is the first voltage following point, and a voltage signal of the anode of the third diode is the voltage signal output by the first voltage clamping circuit.

5. The circuit according to claim 1, wherein the secondary charge clamping circuit(44) further comprises a second clamping coupled circuit(443) and a second voltage clamping circuit(444), wherein
the second clamping coupled circuit(443) is configured to: when the switch circuit is switched on, clamp a voltage at a second voltage following point to a voltage of the voltage signal output by the first voltage clamping circuit, and when the switch circuit is changed from being switched on to being switched off, couple a voltage change at the originating point to the second voltage following point, wherein the second voltage following point is a connection point, which is in connection points at which the second clamping coupled circuit and the second voltage clamping circuit are connected, except a connection point at which an output end of the first voltage clamping circuit is connected, and the first voltage clamping circuit outputs the voltage signal by using the output end that is of the first voltage clamping circuit and that is connected to the second voltage clamping circuit; and
the second voltage clamping circuit(444) is configured to: when the switch circuit is switched off, inject energy into the second voltage clamping circuit by using the charge and discharge circuit, and when the power supply circuit is in a steady state, clamp a voltage of a voltage signal output by the second voltage clamping circuit to a lowest voltage at the second voltage following point, wherein the lowest voltage at the second voltage following point is a lowest voltage at the second voltage following point when the power supply circuit is in a steady state and the switch circuit is in a switch-off period, and the voltage signal output by the second voltage clamping circuit is a voltage signal in the voltage signal output by the secondary charge clamping circuit.

6. The circuit according to claim 5, wherein the second clamping coupled circuit(443) comprises a fourth capacitor and a fourth diode, wherein
one end of the fourth capacitor is connected to the first voltage following point or is connected to a connection point at which the switch circuit and the primary charge clamping circuit are connected, the other end of the fourth capacitor is connected to an anode of the fourth diode, and a cathode of the fourth diode is connected to the output end of the first voltage clamping circuit.

7. The circuit according to claim 5, wherein the second voltage clamping circuit(444) comprises a fifth capacitor and a fifth diode, wherein
one end of the fifth capacitor is connected to the output end of the first voltage clamping circuit, the other end of the fifth capacitor is connected to an anode of the fifth diode, a cathode of the fifth diode is the second voltage following point, and a voltage signal of the anode of the fifth diode is the voltage signal output by the second voltage clamping circuit.

8. The circuit according to claim 1, wherein the voltage signal output by the primary charge clamping circuit(43) and the voltage signal output by the secondary charge clamping circuit(44) are used to supply power for a telephone line connected to a voice port of a telephone exchange.

9. A telephone system, comprising the power supply circuit according to any one of claims 1 to 8 and at least one telephone set.

## Patentansprüche

1. Stromversorgungsschaltung, die eine Steuerschaltung (41), eine Umschaltschaltung (42), eine Lade- und Entladeschaltung (45), eine primäre Ladungsklemmschaltung (43) und eine sekundäre Ladungsklemmschaltung (44) umfasst, wobei die Steuerschaltung (41) konfiguriert ist, in Übereinstimmung mit einer von der primären Ladungsklemmschaltung ausgegebenen Spannung und einer voreingestellten Spannung ein Steuersignal auszugeben;
die Umschaltschaltung (42) konfiguriert ist, in Übereinstimmung mit dem von der Steuerschaltung ausgegebenen Steuersignal zwischen einem eingeschalteten und einem ausgeschalteten Zustand umgeschaltet zu werden;
die Lade- und Entladeschaltung (45) konfiguriert ist: wenn die Umschaltschaltung eingeschaltet ist, Energie über die Umschaltschaltung von einer Gleichstromversorgung zu beziehen und die Energie zu speichern; und wenn die Umschaltschaltung ausgeschaltet ist, separat Energie in die primäre Ladungsklemmschaltung und die sekundäre Ladungsklemmschaltung durch Freigabe der gespeicherten Energie zu injizieren;
wobei die Stromversorgungsschaltung **dadurch gekennzeichnet ist, dass**:
die primäre Ladungsklemmschaltung (43) konfiguriert ist, ein Spannungssignal auszugeben; und
die sekundäre Ladungsklemmschaltung (44) konfiguriert ist, mindestens ein Spannungssignal auszugeben, wobei, wenn eine Differenz zwischen der von der primären Ladungsklemmschaltung ausgegebenen Spannung und der voreingestellten Spannung innerhalb eines eingestellten Bereichs liegt, die Stromversorgungsschaltung in einem Beharrungszustand ist, und wenn die Stromversorgungsschaltung in einem Beharrungszustand ist, die von der primären Ladungsklemmschaltung ausgegebene Spannung nicht gleich einer von der sekundären Ladungsklemmschaltung ausgegebenen Spannung ist;
wobei die sekundäre Ladungsklemmschaltung (44) eine erste gekoppelte Klemmschaltung (441) und eine erste Spannungsklemmschaltung (442) umfasst, wobei
die erste gekoppelte Klemmschaltung (441) konfiguriert ist: wenn die Umschaltschaltung eingeschaltet ist, eine Spannung an einem ersten Spannungsfolgepunkt auf die von der primären Ladungsklemmschaltung ausgegebene Spannung zu klemmen, und wenn die Umschaltschaltung vom eingeschalteten Zustand in den ausgeschalteten Zustand gewechselt wird, eine Spannungsänderung an einem Ausgangspunkt an den ersten Spannungsfolgepunkt zu koppeln, wobei der Ausgangspunkt ein Verbindungspunkt ist, an dem die Lade- und Entladeschaltung und die Umschaltschaltung verbunden sind, der erste Spannungsfolgepunkt ein Verbindungspunkt ist, der an Verbindungspunkten liegt, an denen die erste gekoppelte Klemmschaltung und die erste Spannungsklemmschaltung verbunden sind, mit Ausnahme eines Verbindungspunkts, an dem ein Ausgangsende der primären Ladungsklemmschaltung verbunden ist, und die primäre Ladungsklemmschaltung das Spannungssignal unter Verwendung des Ausgangsendes der primären Ladungsklemmschaltung ausgibt, das mit der ersten Spannungsklemmschaltung verbunden ist; und
die erste Spannungsklemmschaltung (442) konfiguriert ist: wenn die Umschaltschaltung ausgeschaltet ist, Energie unter Verwendung der Lade- und Entladeschaltung in die erste Spannungsklemmschaltung zu injizieren, und wenn die Stromversorgungsschaltung in einem Beharrungszustand ist, eine Spannung eines von der ersten Spannungsklemmschaltung ausgegebenen Spannungssignals auf eine niedrigste Spannung am ersten Spannungsfolgepunkt zu klemmen, wobei die niedrigste Spannung am ersten Spannungsfolgepunkt eine niedrigste Spannung am ersten Spannungsfolgepunkt ist, wenn sich die Stromversorgungsschaltung in einem Beharrungszustand befindet und die Umschaltschaltung in einer ausgeschalteten Periode befindet, und das von der ersten Spannungsklemmschaltung ausgegebene Spannungssignal ein Spannungssignal im von der sekundären Ladungsklemmschaltung ausgegebenen Spannungssignal ist.

2. Schaltung nach Anspruch 1, wobei die primäre Ladungsklemmschaltung (43) eine erste Diode und einen ersten Kondensator umfasst, wobei
eine Kathode der ersten Diode über die Umschaltschaltung mit der Gleichstromquelle verbunden ist, eine Anode der ersten Diode mit einem Ende des ersten Kondensators verbunden ist, das andere Ende des ersten Kondensators geerdet ist und eine Spannung des Endes des ersten Kondensators, das mit der Anode der ersten Diode verbunden ist,
die von der primären Ladungsklemmschaltung ausgegebene Spannung ist.

3. Schaltung nach Anspruch 1, wobei die erste gekoppelte Klemmschaltung (441) einen zweiten Kondensator und eine zweite Diode umfasst, wobei
ein Ende des zweiten Kondensators über die Umschaltschaltung mit der Gleichstromquelle verbunden ist, das andere Ende des zweiten Kondensators mit einer Anode der zweiten Diode verbunden ist, eine Kathode der zweiten Diode mit dem Ausgangsende der primären Ladungsklemmschaltung verbunden ist und die Anode der zweiten Diode der erste Spannungsfolgepunkt ist.

4. Schaltung nach Anspruch 1, wobei die erste Spannungsklemmschaltung (442) einen dritten Kondensator und eine dritte Diode umfasst, wobei
ein Ende des dritten Kondensators mit dem Ausgangsende der primären Ladungsklemmschaltung verbunden ist, das andere Ende des dritten Kondensators mit einer Anode der dritten Diode verbunden ist, eine Kathode der dritten Diode der erste Spannungsfolgepunkt ist und ein Spannungssignal der Anode der dritten Diode das von der ersten Spannungsklemmschaltung ausgegebene Spannungssignal ist.

5. Schaltung nach Anspruch 1, wobei die sekundäre Ladungsklemmschaltung (44) ferner eine zweite gekoppelte Klemmschaltung (443) und eine zweite Spannungsklemmschaltung (444) umfasst, wobei
die zweite gekoppelte Klemmschaltung (443) konfiguriert ist: wenn die Umschaltschaltung eingeschaltet ist, eine Spannung an einem zweiten Spannungsfolgepunkt auf eine Spannung des von der ersten Spannungsklemmschaltung ausgegebenen Spannungssignals zu klemmen, und wenn die Umschaltschaltung vom eingeschalteten Zustand in den ausgeschalteten Zustand gewechselt wird, eine Spannungsänderung am Ausgangspunkt an den zweiten Spannungsfolgepunkt zu koppeln, wobei der zweite Spannungsfolgepunkt ein Verbindungspunkt ist, der an Verbindungspunkten liegt, an denen die zweite gekoppelte Klemmschaltung und die zweite Spannungsklemmschaltung verbunden sind, mit Ausnahme eines Verbindungspunkts, an dem ein Ausgangsende der ersten Spannungsklemmschaltung verbunden ist, und die erste Spannungsklemmschaltung das Spannungssignal unter Verwendung des Ausgangsendes der ersten Spannungsklemmschaltung ausgibt, das mit der zweiten Spannungsklemmschaltung verbunden ist; und
die zweite Spannungsklemmschaltung (444) konfiguriert ist: wenn die Umschaltschaltung ausgeschaltet ist, Energie unter Verwendung der Lade- und Entladeschaltung in die zweite Spannungsklemmschaltung zu injizieren, und wenn die Stromversorgungsschaltung in einem Beharrungszustand ist, eine Spannung eines von der zweiten Spannungsklemmschaltung ausgegebenen Spannungssignals auf eine niedrigste Spannung am zweiten Spannungsfolgepunkt zu klemmen, wobei die niedrigste Spannung am zweiten Spannungsfolgepunkt eine niedrigste Spannung am zweiten Spannungsfolgepunkt ist, wenn sich die Stromversorgungsschaltung in einem Beharrungszustand befindet und die Umschaltschaltung in einer ausgeschalteten Periode befindet, und das von der zweiten Spannungsklemmschaltung ausgegebene Spannungssignal ein Spannungssignal im von der sekundären Ladungsklemmschaltung ausgegebenen Spannungssignal ist.

6. Schaltung nach Anspruch 5, wobei die zweite gekoppelte Klemmschaltung (443) einen vierten Kondensator und eine vierte Diode umfasst, wobei
ein Ende des vierten Kondensators mit dem ersten Spannungsfolgepunkt verbunden ist oder mit einem Verbindungspunkt verbunden ist, an dem die Umschaltschaltung und die primäre Ladungsklemmschaltung verbunden sind, das andere Ende des vierten Kondensators mit einer Anode der vierten Diode verbunden ist und eine Kathode der vierten Diode mit dem Ausgangsende der ersten Spannungsklemmschaltung verbunden ist.

7. Schaltung nach Anspruch 5, wobei die zweite Spannungsklemmschaltung (444) einen fünften Kondensator und eine fünfte Diode umfasst, wobei
ein Ende des fünften Kondensators mit dem Ausgangsende der ersten Spannungsklemmschaltung verbunden ist, das andere Ende des fünften Kondensators mit einer Anode der fünften Diode verbunden ist, eine Kathode der fünften Diode der zweite Spannungsfolgepunkt ist und ein Spannungssignal der Anode der fünften Diode das von der zweiten Spannungsklemmschaltung ausgegebene Spannungssignal ist.

8. Schaltung nach Anspruch 1, wobei das von der primären Ladungsklemmschaltung (43) ausgegebene Spannungssignal und das von der sekundären Ladungsklemmschaltung (44) ausgegebene Spannungssignal verwendet werden, um Strom für eine mit einem Sprachanschluss einer Telefonvermittlung verbundene Telefonleitung zu liefern.

9. Telefonsystem, das die Stromversorgungsschaltung nach einem der Ansprüche 1 bis 8 und mindestens einen Telefonapparat umfasst.

## Revendications

1. Circuit d'alimentation, comprenant un circuit de commande (41), un circuit de commutation (42), un circuit de charge et de décharge (45), un circuit principal de verrouillage de charge (43), et un circuit secondaire de verrouillage de charge (44),
le circuit de commande (41) étant conçu pour émettre un signal de commande selon une tension fournie par le circuit principal de verrouillage de charge et une tension prédéfinie ;
le circuit de commutation (42) étant conçu pour être commuté entre un état de fermeture et un état d'ouverture selon le signal de commande émis par le circuit de commande ;
le circuit de charge et de décharge (45) étant conçu pour : quand le circuit de commutation est fermé, acquérir de l'énergie provenant d'une source électrique à courant continu par l'intermédiaire du circuit de commutation, et stocker l'énergie ; et quand le circuit de commutation est ouvert, injecter séparément de l'énergie dans le circuit principal de verrouillage de charge et le circuit secondaire de verrouillage de charge en libérant l'énergie stockée ;
le circuit d'alimentation étant **caractérisé en ce que** :
le circuit principal de verrouillage de charge (43) est conçu pour émettre un signal de tension ; et
le circuit secondaire de verrouillage de charge (44) est conçu pour émettre au moins un signal de tension, et quand une différence entre la tension fournie par le circuit principal de verrouillage de charge et la tension prédéfinie est dans un intervalle de consigne, le circuit d'alimentation est dans un état stable, et quand le circuit d'alimentation est dans un état stable, la tension fournie par le circuit principal de verrouillage de charge n'est pas égale à une tension fournie par le circuit secondaire de verrouillage de charge ;
le circuit secondaire de verrouillage de charge (44) comprenant un premier circuit couplé de verrouillage (441) et un premier circuit de verrouillage de tension (442),
le premier circuit couplé de verrouillage (441) étant conçu pour : quand le circuit de commutation est fermé, verrouiller une tension à un premier point de suivi de tension sur la tension émise par le circuit principal de verrouillage de charge, et quand le circuit de commutation est commuté de l'état de fermeture à l'état d'ouverture, coupler une variation de tension à un point d'origine sur le premier point de suivi de tension, le point d'origine étant un point de connexion auquel le circuit de charge et de décharge et le circuit de commutation sont connectés, le premier point de suivi de tension étant un point de connexion faisant partie de points de connexion auxquels le premier circuit couplé de verrouillage et le premier circuit de verrouillage de tension sont connectés, à l'exception d'un point de connexion auquel une extrémité de sortie du circuit principal de verrouillage de charge est connectée, et le circuit principal de verrouillage de charge émettant le signal de tension au moyen de l'extrémité de sortie qui appartient au circuit principal de verrouillage de charge et qui est connectée au premier circuit de verrouillage de tension ; et
le premier circuit de verrouillage de tension (442) étant conçu pour : quand le circuit de commutation est ouvert, injecter de l'énergie dans le premier circuit de verrouillage de tension au moyen du circuit de charge et de décharge, et quand le circuit d'alimentation est dans un état stable, verrouiller une tension d'un signal de tension émis par le premier circuit de verrouillage de tension sur une tension minimale au premier point de suivi de tension, la tension minimale au premier point de suivi de tension étant une tension minimale au premier point de suivi de tension quand le circuit d'alimentation est dans un état stable et le circuit de commutation est dans une période d'ouverture, et le signal de tension émis par le premier circuit de verrouillage de tension étant un signal de tension dans le signal de tension émis par le circuit secondaire de verrouillage de charge.

2. Circuit selon la revendication 1, dans lequel le circuit principal de verrouillage de charge (43) comprend une première diode et un premier condensateur,
une cathode de la première diode étant connectée à la source électrique à courant continu par l'intermédiaire du circuit de commutation, une anode de la première diode étant connectée à une extrémité du premier condensateur, l'autre extrémité du premier condensateur étant mise à la terre, et une tension de l'extrémité qui appartient au premier condensateur et qui est connectée à l'anode de la première diode étant la tension émise par le circuit principal de verrouillage de charge.

3. Circuit selon la revendication 1, dans lequel le premier circuit couplé de verrouillage (441) comprend un deuxième condensateur et une deuxième diode,
une extrémité du deuxième condensateur étant connectée à la source électrique à courant continu par l'intermédiaire du circuit de commutation, l'autre extrémité du deuxième condensateur étant connectée à une anode de la deuxième diode, une cathode de la deuxième diode étant connectée à l'extrémité de sortie du circuit principal de verrouillage de charge, et l'anode de la deuxième diode étant le premier point de suivi de tension.

4. Circuit selon la revendication 1, dans lequel le premier circuit de verrouillage de tension (442) comprend un troisième condensateur et une troisième diode,
une extrémité du troisième condensateur étant connectée à l'extrémité de sortie du circuit principal de verrouillage de charge, l'autre extrémité du troisième condensateur étant connectée à une anode de la troisième diode, une cathode de la troisième diode étant le premier point de suivi de tension, et un signal de tension de l'anode de la troisième diode étant le signal de tension émis par le premier circuit de verrouillage de tension.

5. Circuit selon la revendication 1, dans lequel le circuit secondaire de verrouillage de charge (44) comprend en outre un second circuit couplé de verrouillage (443) et un second circuit de verrouillage de tension (444),
le second circuit couplé de verrouillage (443) étant conçu pour : quand le circuit de commutation est fermé, verrouiller une tension à un second point de suivi de tension sur une tension du signal de tension émis par le premier circuit de verrouillage de tension, et quand le circuit de commutation est commuté de l'état de fermeture à l'état d'ouverture, coupler une variation de tension au point d'origine sur le second point de suivi de tension, le second point de suivi de tension étant un point de connexion faisant partie de points de connexion auxquels le second circuit couplé de verrouillage et le second circuit de verrouillage de tension sont connectés, à l'exception d'un point de connexion auquel une extrémité de sortie du premier circuit de verrouillage de tension est connectée, et le premier circuit de verrouillage de tension émettant le signal de tension au moyen de l'extrémité de sortie qui appartient au premier circuit de verrouillage de tension et qui est connectée au second circuit de verrouillage de tension ; et
le second circuit de verrouillage de tension (444) étant conçu pour : quand le circuit de commutation est ouvert, injecter de l'énergie dans le second circuit de verrouillage de tension au moyen du circuit de charge et de décharge, et quand le circuit d'alimentation est dans un état stable, verrouiller une tension d'un signal de tension émis par le second circuit de verrouillage de tension sur une tension minimale au second point de suivi de tension,
la tension minimale au second point de suivi de tension étant une tension minimale au second point de suivi de tension quand le circuit d'alimentation est dans un état stable et le circuit de commutation est dans une période d'ouverture, et le signal de tension émis par le second circuit de verrouillage de tension étant un signal de tension dans le signal de tension émis par le circuit secondaire de verrouillage de charge.

6. Circuit selon la revendication 5, dans lequel le second circuit couplé de verrouillage (443) comprend un quatrième condensateur et une quatrième diode,
une extrémité du quatrième condensateur étant connectée au premier point de suivi de tension ou étant connectée à un point de connexion auquel le circuit de commutation et le circuit principal de verrouillage de charge sont connectés, l'autre extrémité du quatrième condensateur étant connectée à une anode de la quatrième diode, et une cathode de la quatrième diode étant connectée à l'extrémité de sortie du premier circuit de verrouillage de tension.

7. Circuit selon la revendication 5, dans lequel le second circuit de verrouillage de tension (444) comprend un cinquième condensateur et une cinquième diode,
une extrémité du cinquième condensateur étant connectée à l'extrémité de sortie du premier circuit de verrouillage de tension, l'autre extrémité du cinquième condensateur étant connectée à une anode de la cinquième diode, une cathode de la cinquième diode étant le second point de suivi de tension, et un signal de tension de l'anode de la cinquième diode étant le signal de tension émis par le second circuit de verrouillage de tension.

8. Circuit selon la revendication 1, dans lequel le signal de tension émis par le circuit principal de verrouillage de charge (43) et le signal de tension émis par le circuit secondaire de verrouillage de charge (44) sont utilisés pour alimenter une ligne téléphonique connectée à un port vocal d'un central téléphonique.

9. Système téléphonique, comprenant le circuit d'alimentation selon l'une quelconque des revendications 1 à 8 et au moins un combiné téléphonique.
